(19) Europäisches Patentamt
European Patent Office
Office européen des brevets

(11) **EP 0 660 432 B1**

(12) **FASCICULE DE BREVET EUROPEEN**

(45) Date de publication et mention
de la délivrance du brevet:
**01.09.1999 Bulletin 1999/35**

(51) Int Cl.⁶: **H01M 4/58**, H01M 4/62,
H01M 10/40, C01B 31/04

(21) Numéro de dépôt: **94402972.7**

(22) Date de dépôt: **21.12.1994**

(54) **Générateur électrochimique rechargeable au lithium comprenant une anode de carbone et son procédé de fabrication**

Wiederaufladbarer electrochemischer Lithiumgenerator enthaltend eine Kohlenstoffanode und Herstellungsverfahren

Rechargeable electrochemical lithium generator comprising a carbon anode and method of manufacturing

(84) Etats contractants désignés:
**DE FR GB**

(30) Priorité: **22.12.1993 FR 9315474**
**05.07.1994 FR 9408291**

(43) Date de publication de la demande:
**28.06.1995 Bulletin 1995/26**

(73) Titulaire: **ALCATEL**
**75008 Paris (FR)**

(72) Inventeurs:
• **Flandrois, Serge**
**F-33600 Pessac (FR)**
• **Fevrier, Annie**
**F-33160 St Medard en Jalles (FR)**
• **Biensan, Philippe**
**F-91360 Epinay sur Orge (FR)**
• **Simon, Bernard**
**F-92130 Issy les Moulineaux (FR)**

(74) Mandataire: **Laroche, Danièle et al**
**COMPAGNIE FINANCIERE ALCATEL**
**Département Propriété Industrielle**
**30, avenue Kléber**
**75116 Paris (FR)**

(56) Documents cités:
EP-A- 0 239 410      EP-A- 0 267 791
EP-A- 0 381 761      EP-A- 0 573 266
FR-A- 2 682 370

• **PATENT ABSTRACTS OF JAPAN vol. 12 no. 337 (E-657) ,12 Septembre 1988 & JP-A-63 102166 (MITSUBISHI GAS CHEM CO INC) 7 Mai 1988,**
• **CHEMICAL ABSTRACTS, vol. 80, no. 8, 25 Février 1974 Columbus, Ohio, US; abstract no. 39091g, INAGAKI M ET AL 'Structural change of graphite with grinding'**
• **ELECTROCHIMICA ACTA., vol. 38, no.9, Juin 1993 OXFORD GB, pages 1179-1191, J. R. DAHN ET AL 'DEPENDENCE OF THE ELECTROCHEMICAL INTERCALATION OF LITHIUM IN CARBONS ON THE CRYSTAL STRUCTURE OF THE CARBON'**
• **PATENT ABSTRACTS OF JAPAN vol. 17 no. 81 (E-1321) ,18 Février 1993 & JP-A-04 280068 (TAKAMI NORIO) 6 Octobre 1992,**
• **CARBON, vol. 5, 1967 GB, pages 441-451, H. GASPAROUX 'MODIFICATION DES PROPRI T S MAGNITIQUES DU GRAPHITE PAR CR ATION DE SEQUENCES RHOMBO DRIQUES'**
• **PATENT ABSTRACTS OF JAPAN vol. 7 no. 62 (E-164) ,15 Mars 1983 & JP-A-57 208079 (SANYO DENKI KK) 21 Décembre 1982,**

Remarques:
Le dossier contient des informations techniques présentées postérieurement au dépôt de la demande et ne figurant pas dans le présent fascicule.

**Description**

La présente invention concerne une anode de carbone pour générateur électrochimique rechargeable au lithium et son procédé de fabrication. Elle s'étend en outre au générateur la contenant.

L'utilisation de matériau carboné à insertion de lithium dans l'anode des générateurs électrochimiques rechargeables au lithium tend à se généraliser au détriment des anodes de lithium métallique. La cyclabilité du générateur s'en trouve notablement améliorée, ainsi que la sécurité d'emploi. Néanmoins ces matériaux carbonés conduisent à une perte importante de la capacité du générateur au cours des premiers cycles. Une partie de la capacité initiale de la cathode est consommée de manière irréversible par la formation d'une couche de passivation sur le carbone de l'anode, qui est due à la réduction de l'électrolyte. Cette perte est d'autant plus importante que la surface électrochimique du matériau à passiver est grande. Néanmoins l'instabilité à bas potentiel des électrolytes utilisés rend indispensable la présence de cette couche de passivation.

Les premières études réalisées dans ce domaine concernaient des matériaux carbonés du type coke plus au moins bien cristallisés. Aujourd'hui la plupart des travaux portent sur des électrodes à base de graphites naturels ou artificiels comme matériau d'insertion du lithium. Des cokes partiellement graphités, ou mélangés avec du graphite, ont été évoqués à plusieurs reprises, mais également des carbones sphériques et des carbones modifiés. Les modifications physico-chimiques décrites portent généralement sur les propriétés de surface, sur l'ajout d'atomes autres que de carbone au coeur du matériau, ou bien encore sur le taux de graphitation des carbones par traitement thermique. Ces carbones n'ont pas permis de réduire notablement les pertes de capacité dues à la formation de la couche de passivation.

On a alors envisagé de compenser ces pertes en introduisant une réserve de lithium du côté anodique. Ce lithium peut se présenter sous forme d'une feuille métallique accolée à l'anode tel que décrit dans le brevet WO-90/13924, ou bien sous forme de lithium inséré dans l'anode par voie chimique ou électrochimique. La première solution a l'inconvénient de conduire au desserrement du couple électrochimique du fait de la consommation du lithium qui s'insère dans le carbone par court-circuit en laissant un volume vide. La seconde solution impose une étape supplémentaire dans la fabrication de l'anode. Cette étape est de réalisation pratique difficile, en particulier à cause du risque présenté par certains produits utilisés, et ensuite l'anode obtenue doit être ensuite manipulée avec les mêmes précautions que celles requises par le lithium métallique (absence d'eau, ...)

Enfin une capacité supplémentaire destinée à compenser ces pertes peut être introduite dans la cathode sous forme d'ions lithium par une étape de plus au cours de la fabrication de l'électrode, étape coûteuse et complexe à effectuer. Le produit obtenu est instable en présence d'air et d'eau, donc difficilement manipulable.

La présente invention a pour but la réalisation d'une anode de carbone pour générateur rechargeable au lithium qui entraîne une perte de capacité au début de la vie du générateur notablement réduite par rapport à celle observée avec les matériaux carbonés à insertion de lithium connus.

L'objet de la présente invention est un générateur électrochimique rechargeable au lithium incluant une anode de carbone, une cathode, et un électrolyte, ladite anode comprenant un matériau carboné graphité comme matériau électrochimiquement actif, caractérisé en ce que ledit matériau comporte avant cyclage électrique au moins une première phase constituée de graphite de structure cristalline rhomboèdrique dans une proportion supérieure à 10% et en ce qu'il est fabriqué par les étapes du procédé selon l'une des revendications 1 à 3.

De préference, le matériau selon l'invention comporte la première phase rhomboèdrique dans une proportion supérieure à 14%.

L'évaluation électrochimique d'un générateur rechargeable au lithium comportant une anode selon la présente invention, montre que la perte de capacité au premier cycle est notablement réduite, à surface équivalente, par rapport à une anode à base d'un carbone contenant peu ou pas de graphite de structure rhomboèdrique. Pour observer un effet notable il est préférable que la proportion de cette phase rhomboèdrique soit supérieure à 10% du matériau carboné. En effet la perte de capacité initiale est d'autant plus faible, à surface égale, que le taux de phase rhomboèdrique est élevé.

La proportion relative de la phase cristalline rhomboèdrique contenue dans l'anode selon l'invention est donnée par le rapport de l'aire de la raie de diffraction X [101] caractéristique de la phase rhomboèdrique à la somme des aires des raies [101] des phases présentes dans le matériau. Pour une meilleur précision, on peut multiplier l'aire de la raie de diffraction X [101] de la phase rhomboèdrique par le facteur correctif 15/12. Ce taux s'exprime indifféremment en proportion atomique, molaire ou massique puisqu'il s'agit du même élément.

Selon une variante, l'anode comprend un matériau carboné comportant en outre une deuxième phase constituée de graphite de structure cristalline hexagonale. Dans ce cas la proportion de phase rhomboèdrique s'exprime par:

$$\% = \frac{[101] \text{ rhomboèdrique x } 15/12}{([101] \text{ rhomboèdrique x } 15/12) + [101] \text{ hexagonale}} \text{ X } 100$$

Le matériau selon l'invention présente aussi l'avantage de pouvoir être utilisé avec des électrolytes contenant certains solvants comme le diméthoxyéthane (DME) ou le carbonate de propylène (PC) dans lesquels l'exfoliation du graphite est particulièrement élevée. En effet les graphites contenant un taux élevé de phase de structure rhomboèdrique présentent l'avantage d'être très résistants à l'exfoliation. Ce phénomène qui conduit à une destruction partielle des graphites restreint leur utilisation comme matériau d'électrode.

La présente invention a également pour objet un procédé de fabrication d'un matériau carboné graphité comportant au moins une phase constituée de graphite de structure cristalline rhomboèdrique dans une proportion supérieure à 10%, caractérisé en ce qu'il comporte les étapes suivantes:

- on introduit un graphite dont la distance interplanaire est comprise entre 0,335nm et 0,337nm, dans un liquide inerte chimiquement vis à vis dudit graphite,
- on génère dans ledit liquide des ondes ultrasonores par la vibration d'une pièce en contact avec ledit liquide,
- on obtient un matériau carboné graphité comportant au moins une phase de structure cristalline rhomboèdrique dans une proportion supérieure à 10%,
- on sépare du liquide puis on sèche ledit ledit matériau carboné graphité,
- on forme ladite anode en utilisant ledit matériau carboné graphité avant cyclage électrique comme matériau électrochimiquement actif, ledit matériau comportant au moins une première phase constituée de graphite de structure cristalline rhomboèdrique dans une proportion supérieure à 10%,
- on introduit ladite anode dans ledit générateur.

On connait l'utilisation des ondes ultrasonores comme moyen de broyage, notamment pour des matériaux carbonés non cristallins (JP-A-63 102 166) ou expansés (FR-A-2 682 370).

Les ondes ultrasonores sont habituellement générées par une pièce plongée dans le liquide appelée "sonotrode". Elle peut être pleine ou creuse, et de profil variable; elle est généralement métallique. Mais cette pièce peut également être constituée par la cuve contenant le liquide.

Les ondes ultrasonores sont inaudibles par l'oreille humaine, c'est-à-dire qu'elles sont de fréquence supérieure à 16kHz environ. Leur propagation dans le milieu liquide provoque la formation de bulles ou effet de cavitation. Les caractéristiques de l'effet de cavitation obtenu dépendent des paramètres de mise en oeuvre du procédé.

La fréquence des ondes ne doit pas être trop élevée sinon l'effet de cavitation n'a pas le temps de se produire. La plupart des appareils commerciaux utilisés délivre une fréquence comprise entre 20 et 50kHz. Les appareils commerciaux disponibles peuvent générer des fréquences dans un mode continu ou dans un mode pulsé. Ces deux modes de génération des ondes ultrasonores sont utilisables dans le procédé selon l'invention et conduisent à des résultats très proches dans les mêmes conditions d'application.

Il est avantageux d'utiliser un liquide de viscosité élevée: une puissance plus élevée sera nécessaire pour produire la cavitation, mais l'effet en résultant sera augmenté. On utilisera de préférence un liquide choisi parmi l'acétonitrile, l'eau et un mélange aqueux contenant un composé choisi parmi un alcool, comme par exemple l'éthanol, une cétone, comme par exemple l'acétone, et un sel, comme par exemple l'iodure de potassium.

Le procédé de la présente invention a comme avantage de pouvoir être mis en oeuvre aisément, et d'autant plus facilement que le choix du liquide n'entraine pas de difficulté pour la séparation de la poudre. Le traitement est rapide et cause une perte de matière négligeable.

Selon un mode de réalisation préférentiel, l'amplitude de ladite vibration est supérieure à 80µm, ladite température est comprise entre le point de solidification dudit liquide et 20°C, et ladite durée est au moins égale à 10 minutes.

L'accroissement de l'amplitude de la vibration de la pièce, donc de l'onde générée, produit un accroissement de l'effet de cavitation. En pratique on est limité par la puissance de l'appareil utilisé.

Une diminution de la température permet d'accroître la viscosité du liquide. La cavitation sera plus difficile à obtenir à basse température mais ses effets seront plus importants. Bien entendu la température doit être supérieure à la température du point de solidification du liquide utilisé (0°C pour les mélanges aqueux) pour permettre la propagation des ondes ultrasonores.

Quant à la durée d'application des ondes ultrasonores c'est un paramètre qui dépend de la cinétique de la réaction envisagée. Au delà d'un seuil, l'accroissement de la durée du traitement ne permet plus d'augmenter le taux de phase rhomboèdrique.

L'anode selon l'invention contient en outre un liant choisi parmi les polymères fluorés comme le polyfluorure de vinylidène (PVDF) ou le polytétrafluoréthylène (PTFE) et leurs copolymères, les élastomères fluorés comme par exemple le produit connu sous la marque commerciale "VITON" de la société Du Pont de Nemours, le terpolymère d'éthylènepropylène-diène à chaîne principale méthylène (EPDM), la carboxyméthylcellulose (CMC), les copolymères du styrène et du butadiène (SBS), et leurs mélanges.

Selon un premier mode de réalisation de l'invention, l'anode est constituée du mélange dudit matériau carboné graphité obtenu par le procédé selon l'invention et d'un liant polymère, comme le PVDF ou l'un de ses copolymères, déposé sur un collecteur de courant métallique.

Selon un second mode de réalisation, l'anode est constituée du mélange dudit matériau carboné graphité obtenu par le procédé selon l'invention, de noir d'acétylène (AB) et d'un liant polymère, comme le PTFE, déposé sur un collecteur de courant métallique

L'anode obtenue est stable à l'air et en présence d'eau, et sa réalisation est aisée.

La présente invention a encore pour objet un générateur électrochimique rechargeable au lithium utilisant l'anode selon l'invention, et comportant en outre une cathode et un électrolyte.

De préférence, ladite cathode contient un oxyde d'un métal de transition choisi parmi l'oxyde de vanadium, et les oxydes lithiés de manganèse, de nickel, de cobalt, de fer, de titane, et leurs mélanges.

L'électrolyte est composé d'un solvant organique comprenant un mélange d'esters et/ou d'éthers, tel que la diméthoxyéthane (DME). Les esters sont choisis parmi les carbonates de propylène (PC), d'éthylène (EC), de butylène (BC) de diéthyle (DEC), de diméthyle (DMC), et leurs mélanges. Dans ce solvant est dissout un sel de lithium choisi parmi le perchlorate de lithium $LiClO_4$, l'hexafluoroarsénate de lithium $LiAsF_6$, l'hexafluorophosphate de lithium $LiPF_6$, le tétrafluoroborate de lithium $LiBF_4$, le trifluorométhanesulfonate de lithium $LiCF_3SO_3$, le trifluorométhanesulfonimide de lithium $LiN(CF_3SO_2)_2$ (LiTFSI), ou le trifluorométhanesulfonéméthide de lithium $LiC(CF_3SO_2)_3$ (LiTFSM).

D'autres caractéristiques et avantages de la présente invention apparaitront au cours de la description de l'anode selon l'invention et des exemples suivants de modes de réalisation, donnés bien entendu à titre illustratif mais nullement limitatif, en référence au dessin annexé sur lequel:

- la figure 1 est un schéma de la structure cristalline hexagonale,
- la figure 2 est le diagramme de diffraction X de la phase de structure cristalline hexagonale du graphite, l'abscisse indique l'angle de diffraction $\theta$ en degrés avec une anticathode de cuivre de longueur d'onde $\lambda=15,4$ nm et l'ordonnée montre l'intensité relative des raies,
- la figure 3 est un schéma de la structure cristalline rhomboèdrique,
- la figure 4, analogue à la figure 2, est le diagramme de diffraction X de la phase de structure cristalline rhomboèdrique du graphite,
- la figure 5 est le diagramme de diffraction X obtenu pour le matériau carboné graphité contenu dans l'anode selon l'invention avant cyclage électrique, en abscisse est indiquée la distance réticulaire d en nanomètres et l'ordonnée montre l'intensité relative des raies,
- la figure 6 montre en coupe un générateur électrochimique rechargeable au lithium contenant l'anode selon l'invention,
- la figure 7 est un exemple de courbe obtenue lors de la première intercalation et la première désintercalation du lithium dans l'anode selon l'invention, la capacité d'intercalation/désintercalation C en mAh/g de carbone figure en abscisse et la tension V du générateur en volts est donnée en ordonnée,
- la figure 8 montre une partie caractéristique du diagramme de diffraction X d'un graphite commercial, l'abscisse indique l'angle de diffraction $2\theta$ en degrés avec une anticathode de cuivre de longueur d'onde $\lambda=15,4$ nm,
- la figure 9, analogue à la figure 8, montre cette partie du diagramme pour le matériau carboné graphité fabriqué par le procédé de l'invention,
- la figure 10 représente la courbe de première charge et décharge de deux anodes selon la présente invention comprenant un matériau carboné préparé par le procédé de l'invention et le procédé connu respectivement. La capacité massique C du matériau en mAh/g est portée en abscisse et la tension V en volt figure en ordonnée.
- la figure 11 montre une partie caractéristique du diagramme de diffraction X du matériau carboné graphité contenu dans l'anode selon l'invention dans son état initial, l'abscisse indique l'angle de diffraction $2\theta$ en degrés avec une anticathode de cuivre de longueur d'onde $\lambda=15,4$ nm,
- la figure 12, analogue à la figure 11, montre cette partie du diagramme après cyclage de l'anode.

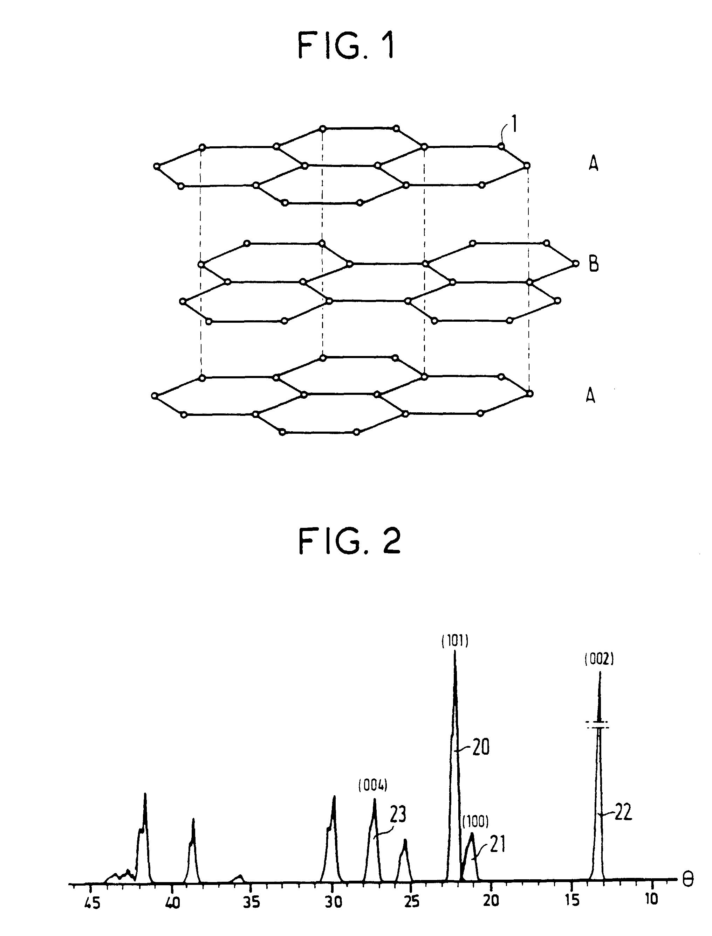

Les graphites naturels bien ordonnés ont une structure majoritairement hexagonale comme l'a montré BERNAL le premier (Proc.Roy.Doc.A., 106 (1924) 749). Cette structure (figure 1) se compose de plans parallèles A et B, distants de 0,335nm à 0,337nm et alternativement décalés, sur lesquels les atomes de carbone 1 se placent selon une symétrie hexagonale. Sur le diagramme de diffraction X d'une telle structure (figure 2) on observe les raies [101] 20 et [100] 21 caractéristiques du système hexagonal.

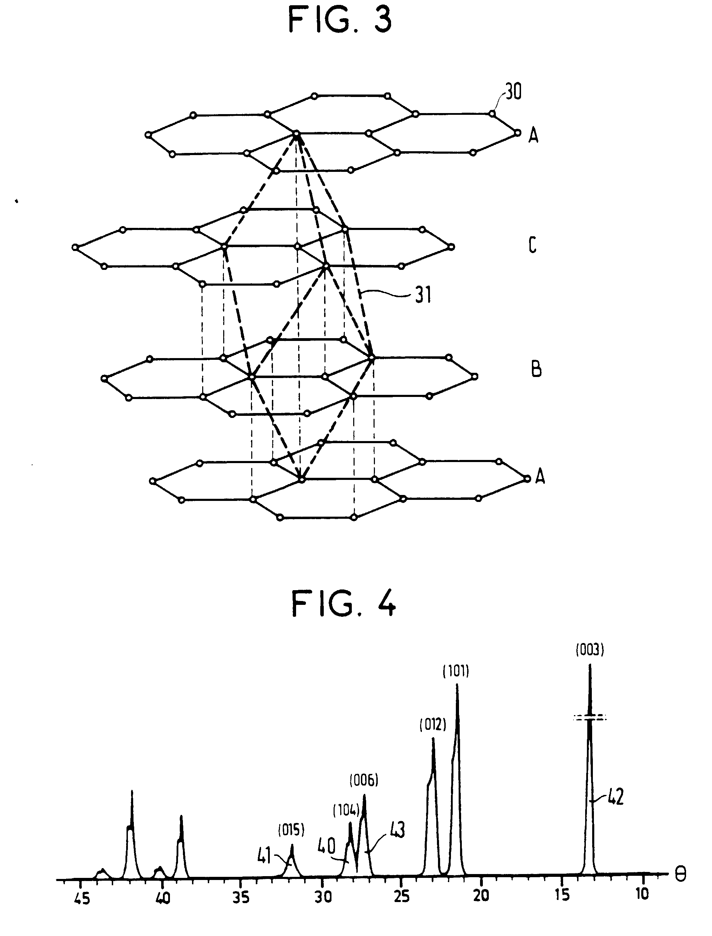

La présence dans certains cas d'une deuxième phase dans le graphite a été reconnue par LIPSON et STOKES (Proc.Roy.Soc.A., 181 (1943) 101) à laquelle on a pu attribuer une symétrie rhomboèdrique. Dans une structure rhomboèdrique, telle que la représente la figure 3, les atomes 30 sont également disposés selon une symétrie hexagonale sur des plans parallèles distant de 0,335nm à 0,337nm. Mais il existe trois positions des plans d'hexagones de carbone A, B et C. Les plans s'ordonnent suivant une périodicité ABCABCA... définissant une maille rhomboèdrique 31. Les raies caractéristiques de cette structure relevées sur le diagramme de diffraction X de la figure 4 sont les raies [104] 40 et [015] 41.

Alors que la structure hexagonale constitue la forme stable, la structure rhomboèdrique est une forme métastable qui disparait par exemple par traitement thermique à une température supérieure à 1000°C dans certaines conditions, sous vide en particulier, et à une température supérieure à 2000°C à la pression atmosphérique.

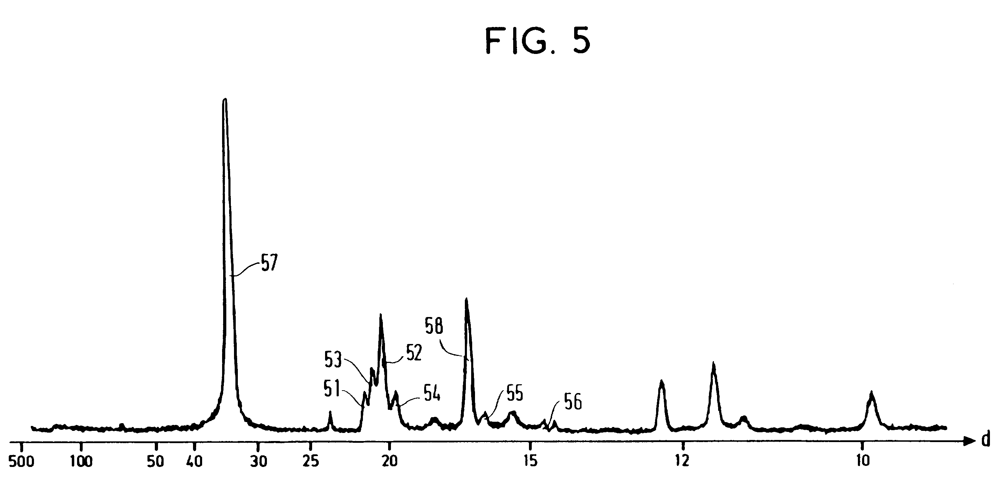

La figure 5 montre le diagramme de diffraction X obtenu dans le cas d'un carbone contenant simultanément ces deux structures. On y retrouve les raies [100] 51 et [101] 52 du système hexagonal voisinant avec les raies [101] 53 et [012] 54 du système rhomboèdrique, ainsi que les raies plus faibles [104] 55 et [015] 56 caractéristiques de la phase rhomboèdrique.

Par ailleurs les raies [002] 22 et [004] 23 du système hexagonal (figure 2) coïncident respectivement avec les raies [003] 42 et [006] 43 du système rhomboèdrique (figure 4) pour donner les raies 57 et 58 (figure 5).

Dans un mélange de ces deux phases, la proportion relative de phase rhomboèdrique est donnée par le rapport de l'aire de la raie [101] 53 de la phase rhomboèdrique à la somme des aires des raies [101] 52 de la phase hexagonale et [101] 53 de la phase rhomboédrique, l'aire de la raie [101] 53 de la phase rhomboèdrique étant affectée du facteur correctif 15/12. L'incertitude sur le résultat est de ±2% sur la valeur calculée. Dans le cas du matériau dont la figure 5 représente le diagramme, ce rapport indique qu'il contient entre 38% et 42% de phase rhomboèdrique (40±2%), le reste étant constitué par la phase hexagonale.

EXEMPLE 1

On réalise des anodes selon la présente invention comprenant des matériaux carbonés graphités référencés a à f (cf. tableau I) comportant un taux variable supérieur à 10% de la phase de structure cristalline rhomboèdrique, le reste du matériau étant principalement constitué par une phase de structure hexagonale. On effectue un mélange comprenant 90% du matériau carboné, 5% de AB de référence "YS" et 5% de PTFE.

L'électrode est fabriquée en incrustant ce mélange sur une grille ou un tissu métallique, ici en cuivre mais on pourrait tout aussi bien utiliser le nickel. Après séchage, on découpe une anode circulaire de 16mm de diamètre et 0,3mm d'épaisseur environ, qui contient une quantité de matériau carboné de l'ordre de 50mg.

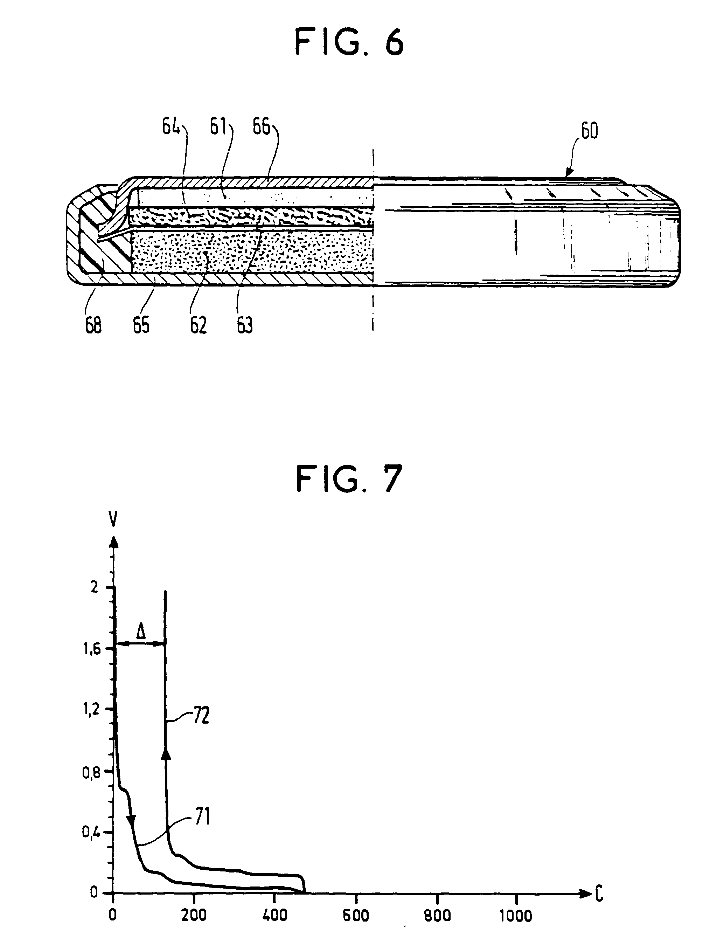

Comme le montre la figure 6, on assemble, pour servir de cellule de test, un générateur électrochimique de type bouton 60 contenant l'anode 61 précédemment réalisée et une contre-électrode 62 qui est un disque de lithium de 22mm de diamètre et pesant environ 110mg. Les deux électrodes sont séparées par un séparateur microporeux 63 en polypropylène (PP) et par un réservoir d'électrolyte 64 constitué de fibres de PP. L'électrolyte utilisé est composé d'un solvant organique, qui est un mélange équivolumique de carbonate d'éthylène et de carbonate de diméthyle (EC/DMC), dans lequel est dissout le sel de lithium LiTFSI à une concentration de 1 mole/litre. L'ensemble est disposé dans une coupelle 65 fermée de manière étanche par un couvercle 66, grâce à un joint 68.

Dans un premier temps, on évalue la surface électrochimiquement active du carbone mouillée par l'électrolyte par une mesure de la capacité de double couche exprimée en millifarad par gramme de carbone (mF/g) qui varie comme la surface. Cette mesure est effectuée par la méthode connue des impédances complexes appliquée aux cellules de test précédemment réalisées dont les anodes comprennent les matériaux a à f. Les résultats sont obtenus avec une précision de ±5% sur la valeur calculée; ils sont rassemblés dans le tableau I.

Dans un second temps, on effectue un cyclage électrochimique des générateurs dont le premier cycle est représenté sur la figure 7. On procède tout d'abord à une première intercalation de lithium dans l'anode à un régime de 40mA/g de carbone jusqu'à un potentiel de o Volt par rapport au lithium $Li/Li^+$ (courbe 71). Puis ce lithium est désintercalé au même régime jusqu'à 2 Volts (courbe 72). La différence de capacité $\Delta$ entre ces deux étapes du cyclage correspond à la perte de capacité due à la passivation de l'anode (capacité de passivation). Les résultats obtenus sont rassemblés dans le tableau I ci-dessous.

TABLEAU I

| Matériau | Phase rhomboèdrique (%) | Capacité de double couche (mF/g) | Capacité de passivation $\Delta$ (mAh/g) |
|---|---|---|---|
| a | 21 | 500 | 50 |
| b | 19 | 600 | 60 |
| c | 23 | 800 | 90 |
| d | 40 | 1100 | 100 |
| e | 21 | 1500 | 110 |
| f | 14 | 1500 | 160 |
| g | 36 | 2100 | 150 |

Pour un taux de phase rhomboèdrique du même ordre, les anodes comprenant les matériaux a, b, c et e ont une capacité de passivation d'autant plus élevée que la surface du carbone (capacité de double couche) est importante. La même constation peut être faite en comparant les anodes comportant les matériaux d et g. Ceci met bien en évidence la nécessité d'utiliser des matériaux dont la surface est la plus faible possible afin de minimiser les pertes de capacités consécutives à la passivation du carbone.

On observe qu'à surface égale (1500mF/g), l'anode comprenant le matériau e contenant 21% de phase rhomboèdrique présente une capacité de passivation de 110mAh/g, alors que l'anode comprenant le matériau f qui ne contient que 14% de cette phase conduit à une perte de capacité de 160mA/g. Par conséquent, à surface égale, pour diminuer la perte de capacité aux premiers cycles il faut augmenter la teneur en phase rhomboèdrique du matériau.

Si on veut augmenter la puissance du générateur, c'est-à-dire la surface active de l'anode, sans augmenter la capacité de passivation il faut également augmenter le taux de phase rhomboèdrique. C'est ce que montre la comparaison des anodes comprenant les matériaux f et g, la capacité de passivation n'augmente pas alors que la surface s'est accrue de 40% parce que le taux de phase rhomboèdrique a plus que doublé, passant de 14% à 36%.

## EXEMPLE 2    Comparatif

De la même manière que décrit dans l'exemple 1, on réalise des anodes à partir de plusieurs matériaux carbonés graphités référencés h à j (cf. tableau II) contenant peu ou pas (moins de 5%) de phase rhomboèdrique. Des générateurs électrochimiques analogues à celui décrit dans l'exemple 1 et représenté sur la figure 6 sont assemblés. Chaque générateur comporte une des anodes précédemment réalisées.

Ainsi qu'il a été décrit dans l'exemple 1, on mesure la capacité de double couche de l'anode et la capacité de passivation du matériau carboné. Ces résultats figurent dans le tableau II ci-dessous.

TABLEAU II

| Matériau | Phase rhomboèdrique (%) | Capacité de double couche (mF/g) | Capacité de passivation (mAh/g) |
|---|---|---|---|
| h | <5 | 400 | 80 |
| i | <5 | 800 | 170 |
| j | <5 | 1200 | 190 |

Par rapport aux matériaux a, c et e du tableau I, on observe qu'à surface équivalente, la perte de capacité causée par la passivation du carbone est plus élevée pour les anodes comprenant respectivement les matériaux h (+60%), i (+89%), et j (+73%) du tableau II.

## EXEMPLE 3

A partir d'un graphite commercial k contenant moins de 5 % de phase rhomboèdrique, on fabrique un matériau carboné graphité par le procédé selon la présente invention de la manière suivante.

La poudre de graphite k est introduite dans un récipient contenant de l'acétonitrile MeCN, à raison de 40cm$^3$ de liquide par gramme de graphite. Ce récipient est placée dans une cuve thermostatée à 20°C. Une sonotrode, reliée à un appareil de puissance 600W délivrant en continu des ondes ultrasonores de fréquence 20kHz, est plongée dans le récipient. La vibration de la sonotrode avec une amplitude de 120μm provoque la propagation d'ondes ultrasonores dans le liquide, ce qui produit la mise en suspension de la poudre de graphite et crée des bulles par l'effet de la cavitation. Après environ 10 minutes de traitement, la sonotrode est retirée. La poudre du matériau 1 obtenu est alors séparée du liquide par filtration et séchée sous vide à 110°C pendant 2 heures. Après traitement, le matériau carboné graphité 1 contient 13% de phase rhomboèdrique.

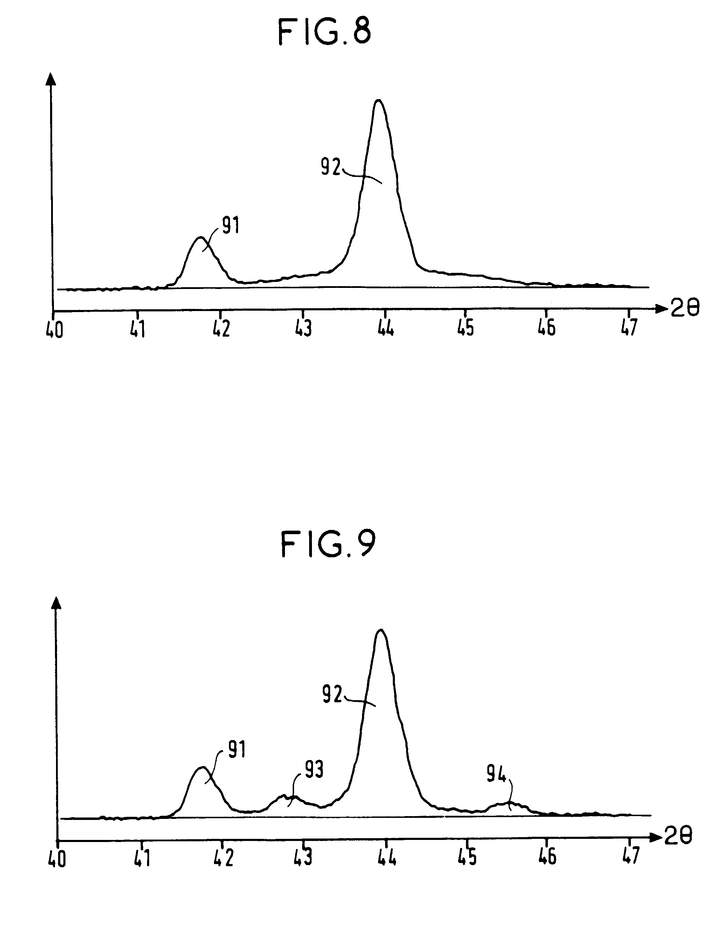

Le diagramme de diffraction X du graphite commercial k (figure 8) présente, dans la zone spectrale comprise entre 40 et 48 degrés, les raies [100] 91 et [101] 92 relatives à la phase hexagonale.

Le diagramme de diffraction X du matériau 1 obtenu (figure 9) présente, dans la zone spectrale comprise entre 40 et 48 degrés, les raies [100] 91 et [101] 92 relatives à la phase hexagonale analogues au graphite et les raies [101] 93 et [012] 94 de la phase rhomboèdrique.

A titre de comparaison, on effectue un traitement d'enrichissement en phase rhomboèdrique par le procédé connu à partir d'un graphite h contenant moins de 5% de phase rhomboèdrique. Le graphite h pulvérulent est broyé au broyeur à couteaux pendant une durée minimum de 15 minutes. On obtient alors une poudre d'un matériau carboné f contenant 14% de phase rhomboèdrique.

De la même manière que décrit dans l'exemple 1, on réalise des anodes à partir des matériaux carbonés graphités k, 1, h et f. Des générateurs électrochimiques analogues à celui décrit dans l'exemple 1 et représenté sur la figure 6 sont assemblés. Chaque générateur comporte une des anodes précédemment réalisées.

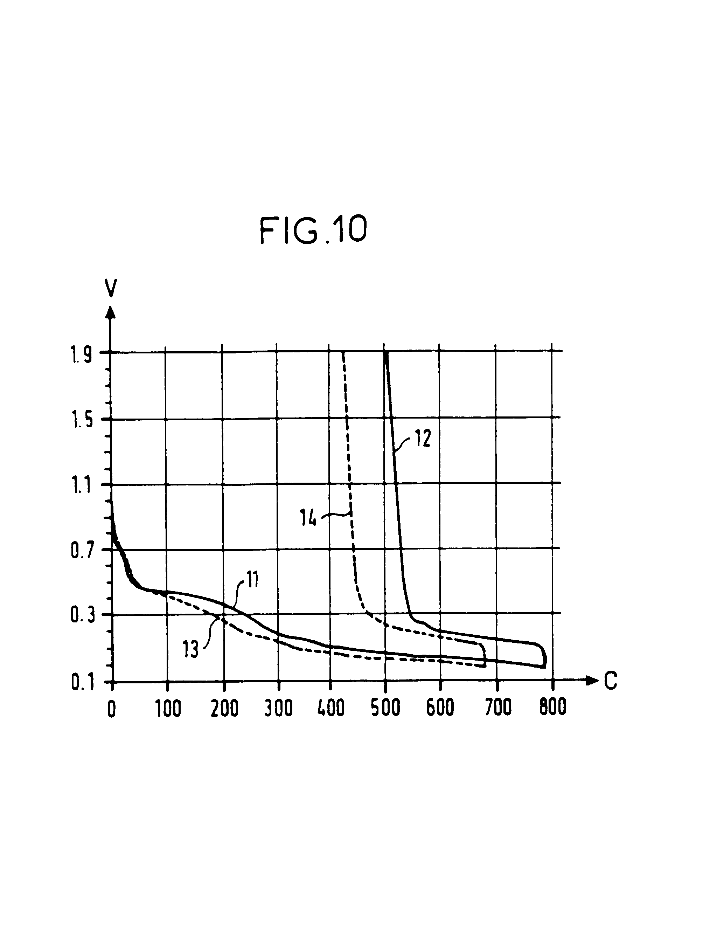

Ainsi qu'il a été décrit dans l'exemple 1, on évalue d'abord la surface du matériau par la mesure de la capacité de double couche, puis on effectue un cyclage électrochimique des générateurs assemblés précédemment dont le premier cycle est représenté sur la figure 10 pour les matériaux k (courbes 11-12) et 1 (courbes 13-14). On procède tout d'abord à une première intercalation de lithium dans l'anode (courbes 11 et 13) à un régime de 40 mA/g de carbone jusqu'à un potentiel de 0 Volt par rapport au lithium Li/Li$^+$. Puis ce lithium est désintercalé (courbes 12 et 14) au même régime jusqu'à 2 Volts. La différence de capacité $\Delta$ entre ces deux étapes du cyclage correspond à la perte de capacité due à la passivation de l'anode (capacité de passivation).

Les résultats sont donnés dans le tableau III ci-dessous.

TABLEAU III

| Matériau | Phase rhomboèdrique (%) | Capacité de double couche (mF/g) | Capacité de passivation (mAh/g) |
|---|---|---|---|
| k | <5 | 245 | 505 |
| l | 13 | 256 | 420 |
| h | <5 | 400 | 80 |
| f | 14 | 1500 | 160 |

On voit que l'élaboration du matériau carboné 1 en utilisant le procédé de la présente invention permet de conserver une surface électrochimique du même ordre de grandeur que le graphite commercial initial k, ce qui n'est pas le cas pour le matériau f, obtenu à partir du graphite h avec le procédé connu, dont la surface a été multipliée par quatre environ. Pour des surfaces du même ordre, la perte de capacité est réduite de 17% lorsque le matériau de l'anode a été obtenu par le procédé selon l'invention.

EXEMPLE 4

A partir du même graphite commercial k, on fabrique un matériau carboné par le procédé selon la présente invention dans des conditions analogues à celles décrites dans l'exemple 3 à l'exception de la durée du traitement qui est de 2mn, 5mn et 60mn respectivement pour les matériaux m, n et p. Les résultats obtenus sont dans le tableau IV ci-dessous.

TABLEAU IV

| Matériau | Durée du traitement (minutes) | Phase rhomboèdrique (%) |
|---|---|---|
| m | 2 | 5 |
| n | 5 | 9 |
| l | 10 | 13 |
| p | 60 | 12 |

Il est clair que dans ces conditions, une durée de traitement de 10 minutes suffit à obtenir l'enrichissement maximum.

EXEMPLE 5

A partir du même graphite commercial k, on fabrique un matériau carboné par le procédé selon la présente invention dans des conditions analogues à celles décrites dans l'exemple 3 à l'exception de la température de traitement. La cuve est thermostatée à 1°C et 48°C respectivement pour l'élaboration des matériaux q et r. Les résultats obtenus sont dans le tableau V ci-dessous.

TABLEAU V

| Matériau | Température du traitement (°C) | Phase rhomboèdrique (%) |
|---|---|---|
| q | 1 | 13 |
| l | 20 | 13 |

TABLEAU V   (suite)

| Matériau | Température du traitement (°C) | Phase rhomboèdrique (%) |
|----------|-------------------------------|--------------------------|
| r | 48 | 7 |

On voit que le traitement doit s'effectuer de préférence à des température peu élevées, inférieures ou égales à la température ambiante.

EXEMPLE 6

A partir du même graphite commercial k, on fabrique un matériau carboné par le procédé selon la présente invention dans des conditions analogues à celles décrites dans l'exemple 3 à l'exception du milieu liquide utilisé qui est de l'eau, une solution aqueuse contenant 20% en volume d'éthanol $C_2H_5OH$, une solution aqueuse contenant 20% en volume d'acétone $(CH_3)_2CO$, une solution aqueuse d'iodure de potassium KI à 0,5 mole/litre. Les taux de phase rhomboèdrique dans les poudres obtenues sont de l'ordre de 12 à 13% pour tous les matériaux obtenus.

EXEMPLE 7

Le matériau carboné d contenant initialement 40% environ de phase rhomboèdrique est traité thermiquement à 2400°C sous argon pendant 15 minutes. Ce traitement a pour effet de diminuer de façon notable le taux de phase rhomboèdrique qui n'est plus que de 21% après traitement. Un prolongement de ce traitement conduit à la disparition complète de cette phase.

EXEMPLE 8

On réalise une électrode de la manière suivante à partir du matériau carboné d contenant environ 40% de phase rhomboèdrique. Le matériau d, à raison de 85% en poids, est mélangé à 15% de PVDF. Le mélange est mis en suspension dans la N-méthyl-pyrrolidone (NMP), mais on pourrait tout aussi bien employer la dimétlhylformamide (DMF), et enduit sur un collecteur métallique qui est une feuille de cuivre d'une dizaine de microns d'épaisseur.

Après séchage, on découpe une anode comme décrit dans l'exemple 1, et on assemble un générateur électrochimique de type bouton analogue à celui décrit dans l'exemple 1 et représenté sur la figure 6 mais comportant l'anode réalisée précédemment.

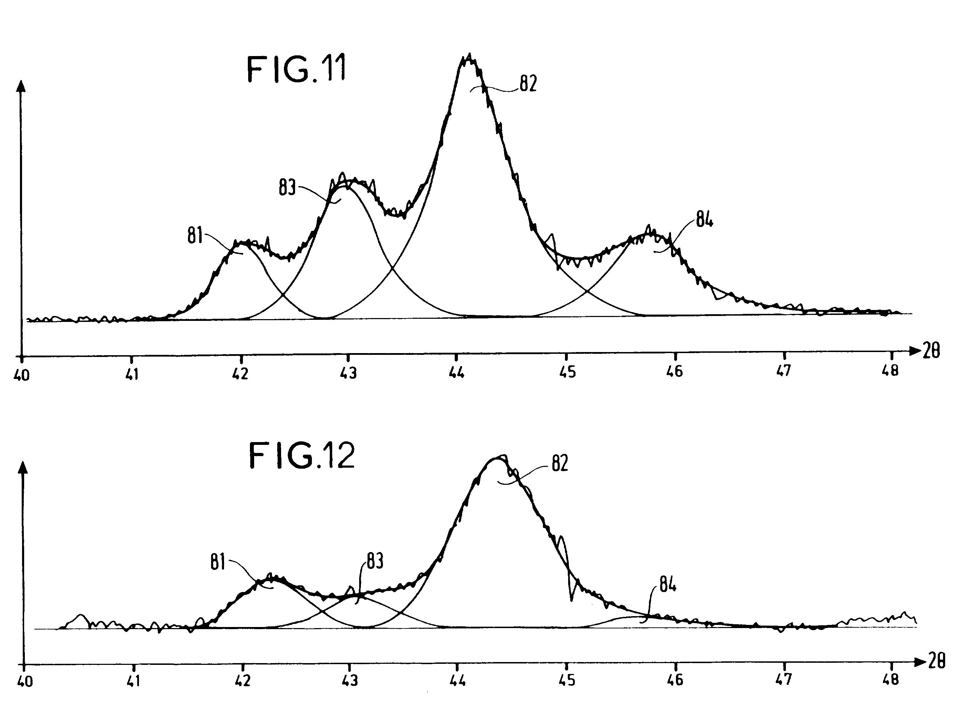

De la manière décrite dans l'exemple 1, on effectue un cyclage électrochimique du générateur. Le diagramme de diffraction X du matériau carboné (figure 11) présente dans la zone spectrale comprise entre 40 et 48 degrés (angle de diffraction 2θ, avec une anticathode de cuivre de longueur d'onde λ=15,4 nm) les raies [100] 81 et [101] 82 relatives à la phase hexagonale et les raies [101] 83 et [012] 84 de la phase rhomboèdrique.

Après 10 cycles, le diagramme (figure 12) montre dans cette même zone un affaiblissement très net des raies 83 et 84: en effet la proportion de phase rhomboèdrique n'est plus que de 11% environ. Il est clair que la phase rhomboèdrique agit bien dans les premiers cycles de la vie du générateur ce qui se traduit par une disparition partielle de cette phase.

EXEMPLE 9

De la même manière que décrit dans l'exemple 1, on réalise des anodes à partir de plusieurs matériaux carbonés graphités référencés s, t, et u (cf. tableau VI) contenant respectivement moins de 5% de phase rhomboèdrique, 23% et 37% de phase rhomboèdrique. Des générateurs électrochimiques analogues à celui décrit dans l'exemple 1 et représenté sur la figure 6 sont assemblés. Chaque générateur comporte une des anodes précédemment réalisées et un électrolyte composé d'un solvant organique, qui est un mélange de 20% en volume de EC, de 20% en volume de PC et de 60% en volume de DMC, dans lequel est dissout le sel de lithium $LiPF_6$ à une concentration de 1 mole/litre.

Ainsi qu'il a été décrit dans l'exemple 1, on mesure la capacité de double couche de l'anode et la capacité de passivation du matériau carboné. Ces résultats figurent dans le tableau VI ci-dessous.

TABLEAU VI

| Matériau | Phase rhomboèdrique (%) | Capacité de double couche (mF/g) | Capacité de passivation (mAh/g) | Exfoliation |
|---|---|---|---|---|
| s | <5 | 350 | pas de fonctionnement | oui |
| t | 23 | 400 | 370 | faible |
| u | 37 | 400 | 70 | non |

On observe que le graphite contenant peu ou pas de phase rhomboèdrique (matériau s) est extrêmement sensible à l'exfoliation. Il est par conséquent inutilisable dans l'électrolyte considéré, et d'une manière générale dans tout électrolyte contenant du PC.

Par contre les matériaux selon la présente invention (matériaux t et u) ont un fonctionnement électrochimique satisfaisant, et la perte de capacité due à la passivation et à l'exfoliation est d'autant plus faible que le taux de phase rhomboèdrique dans le graphite est élevé

**Revendications**

1.   Procédé de fabrication d'un générateur comportant les étapes suivantes:

   - on introduit un graphite dont la distance interplanaire est comprise entre 0,335nm et 0,337nm, dans un liquide inerte chimiquement vis à vis dudit graphite,
   - on génère dans ledit liquide des ondes ultrasonores par la vibration d'une pièce en contact avec ledit liquide,
   - on obtient un matériau carboné graphité comportant au moins une phase de structure cristalline rhomboèdrique dans une proportion supérieure à 10%,
   - on sépare du liquide puis on sèche ledit ledit matériau carboné graphité,
   - on forme ladite anode en utilisant ledit matériau carboné graphité avant cyclage électrique comme matériau électrochimiquement actif, ledit matériau comportant au moins une première phase constituée de graphite de structure cristalline rhomboèdrique dans une proportion supérieure à 10%,
   - on introduit ladite anode dans ledit générateur.

2.   Procédé selon la revendication 2, dans lequel ledit liquide est choisi parmi l'acétonitrile, l'eau et un mélange aqueux contenant un composé choisi parmi un alcool, une cétone et un sel.

3.   Procédé selon la revendication 3, dans lequel l'amplitude de ladite vibration est supérieure à 80$\mu$m, ladite température est comprise entre le point de solidification dudit liquide et 20°C, et ladite durée est au moins égale à 10 minutes.

4.   Générateur électrochimique rechargeable au lithium incluant une anode de carbone, une cathode, et un électrolyte, ladite anode comprenant un matériau carboné graphité comme matériau électrochimiquement actif, caractérisé en ce que ledit matériau comporte avant cyclage électrique au moins une première phase constituée de graphite de structure cristalline rhomboèdrique dans une proportion supérieure à 10% et en ce qu'il est fabriqué par les étapes du procédé selon l'une des revendications 1 à 3.

5.   Générateur selon la revendication 4, dans lequel ledit matériau comporte ladite première phase dans une proportion supérieure à 14%.

6.   Générateur selon l'une des revendications 4 et 5, dans lequel ledit matériau comporte en outre une deuxième phase constituée de graphite de structure cristalline hexagonale.

7.   Générateur selon l'une des revendications précédentes, dans lequel ladite anode contient en outre un liant choisi parmi les polymères fluorés et leurs copolymères, les élastomères fluorés, le terpolymère d'éthylène-propylène-diène à chaîne principale méthylène, la carboxyméthylcellulose, les copolymères du styrène et du butadiène, et leurs mélanges.

8.   Générateur selon l'une des revendications précédentes, dans lequel ladite cathode contient un oxyde d'un métal de transition choisi parmi l'oxyde de vanadium, et les oxydes lithiés de manganèse, de nickel, de cobalt, de fer, de titane, et leurs mélanges.

**Patentansprüche**

1.  Verfahren zum Herstellen eines Generators mit den folgenden Schritten:

    -   Einbringen eines Graphits mit einem Ebenenabstand zwischen 0,335 und 0,337 nm in eine gegenüber dem Graphit chemisch inerte Flüssigkeit,
    -   Erzeugen von Ultraschallwellen in der Flüssigkeit durch Schwingung eines Teils in Kontakt mit der Flüssigkeit,
    -   Erhalten eines graphithaltigen, kohlenstoffhaltigen Materials, das wenigstens eine Phase mit rhomboedrischer Kristallstruktur in einem Anteil von mehr als 10% enthält,
    -   Abtrennen des graphithaltigen, kohlenstoffhaltigen Materials von der Flüssigkeit und dann Trocknen desselben,
    -   Bilden der Anode unter Verwendung des graphithaltigen, kohlenstoffhaltigen Materials vor elektrischer Wechselbehandlung als elektrochemisch aktives Material, wobei das Material wenigstens eine erste Phase, die aus Graphit mit rhomboedrischer Kristallstruktur besteht, in einem Anteil von mehr als 10% enthält,
    -   Einbringen der Anode in den Generator.

2.  Verfahren nach Anspruch 1, bei dem die Flüssigkeit ausgewählt ist unter Acetonitril, Wasser und einem wässrigen Gemisch, das eine unter einem Alkohol, einem Keton und einem Salz ausgewählte Verbindung enthält.

3.  Verfahren nach Anspruch 2, bei dem die Amplitude der Schwingung größer als 80 µm ist, die Temperatur zwischen dem Erstarrungspunkt der Flüssigkeit und 20°C liegt und die Dauer wenigstens gleich 10 Minuten ist.

4.  Wiederauflabarer elektrochemischer Generator auf Lithiumgrundlage, der eine Kohlenstoffanode, eine Kathode und einen Elektrolyten enthält, wobei die Anode als elektrochemisch aktives Material ein kohlenstoffhaltiges, graphithaltiges Material umfaßt, dadurch gekennzeichnet, daß das Material vor elektrischer Wechselbehandlung wenigstens eine erste Phase, die aus Graphit mit rhomboedrischer Kristallstruktur besteht, in einem Anteil von mehr als 10% enthält, und daß er mit den Schritten des Verfahrens nach einem der Ansprüche 1 bis 3 hergestellt ist.

5.  Generator nach Anspruch 4, bei dem das Material die erste Phase in einem Anteil von mehr als 14% enthält.

6.  Generator nach Anspruch 4 oder 5, bei dem das Material ferner eine zweite Phase umfaßt, die aus Graphit mit hexagonaler Kristallstruktur besteht.

7.  Generator nach einem der vorhergehenden Ansprüche, bei dem die Anode ferner ein Bindemittel enthält, das unter den fluorhaltigen Polymeren und ihren Copolymeren, den fluorhaltigen Elastomeren, Ethylen-Propylen-Dien-Terpolymer mit Methylen-Hauptkette, Carboxymethylcellulose, den Styrol-Butadien-Copolymeren und ihren Gemischen ausgewählt ist.

8.  Generator nach einem der vorhergehenden Ansprüche, bei dem die Kathode ein Übergangsmetalloxid enthält, das unter Vanadiumoxid und den lithiumhaltigen Oxiden von Mangan, Nickel, Kobalt, Eisen, Titan, sowie ihren Gemischen ausgewählt ist.

**Claims**

1.  A process for the production of a cell comprising the following steps:

    .   introducing graphite having a distance between planes lying in the range 0.335 nm to 0.337 nm into a liquid which is chemically inert to said graphite;
    .   generating ultrasound waves in said liquid by vibrating an element which is in contact with said liquid;
    .   obtaining a carbon-containing graphite-containing material including at least one phase of rhombohedral crystal structure constituting a fraction of more than 10%;
    .   separating said graphite-containing carbon-containing material from the liquid, then drying;
    .   forming said anode by using said carbon-containing graphite-containing material, prior to electrical cycling, as an electrochemically active material, said material including at least a first phase comprising a rhombohedral crystal structure graphite constituting a fraction of more than 10%; and

.    introducing said anode into said cell.

2.    A process according to claim 1, wherein said liquid is selected from acetonitrile, water and an aqueous mixture containing a compound selected from an alcohol, a ketone and a salt.

3.    A process according to claim 2, wherein the amplitude of said vibration is greater than 80 pm, said temperature is between the freezing point of said liquid and 20°C, and said period is at least 10 minutes.

4.    A lithium rechargeable electrochemical cell including a carbon anode, a cathode, and an electrolyte, said anode comprising a graphite-containing carbon-containing material as electrochemically active material, characterized in that said material includes, prior to electrical cycling, at least a first phase constituted by graphite having a rhombohedral crystal structure and constituting a fraction of more than 10%, and in that it is produced by the steps of the process according to any one of claims 1 to 3.

5.    A cell according to claim 4, in which said material includes said first phase in a fraction of more than 14%.

6.    A cell according to claim 4 or 5, in which said material further includes a second phase constituted by graphite having a hexagonal crystal structure.

7.    A cell according to any one of the preceding claims, in which said anode also contains a binder selected from fluorine-containing polymers and copolymers thereof, fluorine-containing elastomers, ethylene-propylene-diene terpolymer with a methylene main chain, carboxymethylcellulose, copolymers of styrene and butadiene, and mixtures thereof.

8.    A cell according to any one of the preceding claims, wherein said cathode contains a transition metal oxide selected from vanadium oxide, lithium-containing manganese oxides, and oxides of nickel, cobalt, iron, titanium and mixtures thereof.

# FIG. 1

# FIG. 2

# FIG. 3

# FIG. 4

# FIG. 5

EP 0 660 432 B1

# FIG. 6

# FIG. 7

# FIG.8

# FIG.9

# FIG.10

FIG.11

FIG.12

EP 0 660 432 B1